Europäisches Patentamt

European Patent Office

Office européen des brevets

(11) Publication number: **0 557 573 A2**

# EUROPEAN PATENT APPLICATION

(21) Application number: 92111215.7

(22) Date of filing: 02.07.92

(51) Int. Cl.⁵: **C08J 5/18, C08L 53/02**

(30) Priority: **28.02.92 US 843002**

(43) Date of publication of application:
**01.09.93 Bulletin 93/35**

(84) Designated Contracting States:
**DE DK ES FR GB IT**

(71) Applicant: **FINDLEY ADHESIVES INC.**
**11320 Watertown Plank Road**
**Wauwatosa Wisconsin 53226-3413(US)**

(72) Inventor: **Toonen, Diane M.**
**2054 South 102nd Street, No. 225**
**West Allis, WI 53227(US)**
Inventor: **Alper, Mark, D.**
**3245 South Pinewood Creek, Apts.No. 105**
**New Berlin, WI 53151(US)**

(74) Representative: **von Füner, Alexander, Dr. et al**
**Patentanwälte v. Füner, Ebbinghaus, Finck**
**Mariahilfplatz 2 & 3**
**D-81541 München (DE)**

(54) **Packaging film for cold-flowing adhesive compositions.**

(57) An improved packaging film for enclosing cold-flowing hot melt adhesive compositions and which may be melted and combined together with the hot melt adhesive compositions with no deleterious results, thereby eliminating any waste packaging, and wherein the composition includes an intimate blend of a styrene-isoprene-styrene copolymer; an aromatic hydrocarbon resin; a suitable mineral oil; a wax; and an antioxidant/stabilizer.

EP 0 557 573 A2

## 1. Field of The Invention:

The present invention relates to a packaging film, and more particularly to a packaging film which is useful in enclosing cold flowing, pressure sensitive hot melt adhesives, and wherein the packaging film may be melted and combined with the hot melt adhesive without substantially effecting the parameters and conditions under which these pressure sensitive adhesives are typically employed in a manufacturing environment, or the physical and performance characteristics of the pressure sensitive adhesive.

## 2. Background of The invention:

The adhesives industry has long recognized that problems exist regarding the storage and shipment of hot melt pressure sensitive adhesives, and more particularly, hot melt adhesives which are supplied to manufacturers of non-woven products. The problems faced by the adhesives industry relates primarily to the propensity for these same adhesive compositions to cold flow, or creep, when stored for prolonged periods of time at elevated temperatures.

To address this troublesome difficulty, those skilled in the art have turned to expedient and conventional packaging techniques such as, for example, shipping these adhesive compositions in rigid containers, such as 55 gallon drums, or silicone coated corrugated, or particle board boxes, or alternatively, silicone coated polymer-based trays which are typically manufactured from a high density polyethylene. While this solution will solve the problem, noted above, in some industrial environments, and applications, it presents a multiplicity of additional difficulties, and other drawbacks which have detracted from its usefulness. For example, the more traditional methods of shipping these hot melt adhesive compositions creates problems related to the cost and disposal of the packaging materials. In this regard, the silicone coated polymer-based trays employed for shipping these hot melt adhesive compositions nay cost as much as one dollar per unit, or more to purchase. As should be understood, the presence of a silicone coating makes a polyethylene based container very difficult if not impossible to recycle. Therefore, these trays, or other containers, in many instances, are merely collected and disposed of at landfill sites. In some manufacturing operations, as much as several hundreds of thousands of dollars of tray-type or similar packaging, as described above, is disposed of, per year, thereby creating a troublesome source of pollution. Further, these silicone coated containers create other difficulties in that under certain environmental circumstances, a great deal of physical force must be applied to the adhesive to extract it from these containers. Additionally, this same adhesive is inconvenient to handle, and may create problems relative to the safety of employees.

In response to these perceived shortcomings noted above, some manufacturers have attempted to produce synthetic trays which are readily recyclable, or which can, alternatively, be returned and reused for subsequent shipments of adhesives. These solutions, however attractive by their relative simplicity, have not been embraced widely in the industry due to an obvious lack of commercial appeal. More particularly, the development of a new, more readily recyclable tray has produced, as a byproduct, retooling, and other manufacturing expenses, which have been substantial in some respects, and which have worked as a deterrent to the adoption of this solution as an answer to the aforementioned perceived shortcomings. Further, and with respect to the production of reusable trays or containers, it should be understood that this solution has also not been widely adopted due to commercial considerations. In particular, the per unit cost of such containers is usually significantly greater than disposable containers in that the reusable containers are generally manufactured from a thicker gauge material. This thicker material is selected, of course, to lend a measure of durability to the containers such that they may survive multiple uses. Additionally, the costs attendant to collecting and returning the spent containers or trays to the manufacturers for subsequent use has further caused this proposed solution to be quite expensive and therefore commercially unacceptable.

At least one adhesive manufacturer has approached the problem related to the less than attractive alternatives of shipping cold flowing, pressure sensitive hot melt adhesive compositions by designing a meltable package which encloses the pressure sensitive adhesive. In this instance, the package is a polymer based film which will melt when exposed to the heat of application machinery such that the user of the pressure sensitive adhesive does not have any residual waste packaging. More particularly, the H.B. Fuller Company of St. Paul, Minnesota markets under the trademark "Zeropack" a combined package/product of hot melt adhesives. While this product appears to be somewhat effective for its intended purposes it also has readily apparent shortcomings which have detracted from its usefulness. For example, it is readily apparent that the composition employed in such packaging film includes either a high molecular weight ethylene vinyl acetate (EVA) or alternatively, a low density polyethylene. In either case, these

2

compositions, once melted, and mixed with the hot melt adhesive which were enclosed therein, have a propensity under certain manufacturing conditions to clog filters and nozzles in conventional production machinery. Further, experience has indicated that the addition of even a few percent, by weight, of these above-identified compositions to a typical hot melt or pressure sensitive adhesive composition has an adverse effect on the ability of the hot melt adhesive to form an effective bond with assorted target substrates.

Therefore, it has long been known that it would be desireable to have an improved packaging film for enclosing pressure sensitive, cold-flowing, hot melt adhesive compositions and which is operable to reduce the attendant waste produced as a result of utilizing conventional packaging techniques, and which further reduces or substantially eliminates any troublesome clogging or other deleterious effects which may occur when it is used in combination with conventional adhesive application machinery. The improved packaging film of the present invention additionally has no substantial effect on the ability of the hot melt adhesive composition to form effective bonds on the desired substrates, nor blocks similar films at elevated storage temperatures. The composition of the subject invention is both inexpensive to manufacture and sell and further is characterized by its ease of utilization.

## SUMMARY OF THE INVENTION

Therefore, it is an object of the present invention to provide an improved packaging film for enclosing cold-flowing, pressure sensitive, hot melt adhesive compositions.

Another object of the present invention is to provide an improved packaging film which is operable to enclose cold-flowing, pressure sensitive, hot melt adhesive compositions for storage, and which further may be melted, and combined with the hot melt adhesive compositions during the manufacturing process, thereby eliminating any waste packaging problems.

Another object of the present invention is to provide an improved packaging film which is substantially nonblocking when exposed to environmental condition which include 120° F for 24 hours.

Another object of the present invention is to provide an improved packaging film wherein the melted packaging film, when combined with the hot melt adhesive composition during the manufacturing application process, does not have any substantial deleterious effects on the physical, or performance characteristics of the hot melt adhesive composition.

Another object of the present invention is to provide an improved packaging film wherein the viscosity of the packaging film is about 40,000 to about 500,000 cP at a temperature of 325° F.

Another object of the present invention is to provide an improved packaging film wherein, in the preferred form, the composition includes:

about 30%, by weight, of a mixture of aromatic resin copolymers which include vinyl toluene, and alpha methyl styrene;

about 50%, by weight, of a styrene-isoprene-styrene block copolymer, and wherein the percentage weight of styrene in the styrene-isoprene-styrene block copolymer is greater than 20% of the weight of the styrene-isoprene-styrene block copolymer;

about 10%, by weight, of a compatible hydrocarbon wax; and

about 3%, by weight, of a compatible antioxidant/stabilizer.

Another object of the present invention is to provide an improved packaging film wherein the mixture of aromatic resin copolymers employed in the preferred formulation includes about 50%, by weight, of vinyl toluene, and about 50%, by weight, of alpha methyl styrene.

Another object of the present invention is to provide an improved packaging film wherein the compatible hydrocarbon wax includes a fully refined paraffin wax which has a melting point of above 150° F, and wherein the antioxidant includes a hindered phenolic antioxidant.

Another object of the present invention is to provide an improved packaging film which is easy to employ in the packaging of cold-flowing, pressure sensitive, hot melt adhesive compositions, and which further can be utilized in combination with conventional form and fill packaging machinery.

Another object of the present invention is to provide an improved packaging film which is operable to obtain the individual benefits and conveniences to be derived from related prior art compositions, and practices, while avoiding the detriments individually associated therewith.

Further objects and advantages are to provide improved elements and formulations thereof in an improved packaging film for the purposes intended, and which is dependable, durable, convenient, economical and otherwise fully effective in accomplishing its intended objectives.

These and other objects and advantages are achieved in an improved packaging film for enclosing cold-flowing, pressure sensitive, hot melt adhesive compositions, the packaging film including,

about 20% to about 80%, by weight, of a styrene-isoprene-styrene copolymer;

0 to about 50%, by weight, of an aromatic hydrocarbon resin;

0 to about 30%, by weight, of a suitable mineral oil;

0 to about 10%, by weight, of a wax; and

0 to about 5%, by weight, of an antioxidant/stabilizer.

## DESCRIPTION OF THE PREFERRED EMBODIMENT

As indicated above, the preferred formulation for the improved packaging film of the present invention contains about 20% to about 80%, by weight, of a styrene-isoprene-styrene block copolymer; 0 to about 50%, by weight, of an aromatic hydrocarbon resin; 0 to about 30%, by weight, of a suitable mineral oil; 0 to about 40%, by weight, of a wax: and 0 to about 5%, by weight, of an antioxidant/stabilizer.

The cold-flowing, pressure sensitive, hot melt adhesive compositions which may be individually packaged and shipped in the improved packaging film of the present invention includes pressure sensitive, hot melt adhesive formulations such as those which are commercially available from Findley Adhesives, Inc., of Wauwatosa, Wisconsin and which are sold under the trade designations 580-336; H2239 and H4003, respectively. These pressure sensitive, hot melt adhesive compositions are useful in the manufacture of nonwoven products, as well as other utilitarian articles of commerce. As should be understood, and as discussed briefly above, pressure sensitive, hot melt adhesive compositions, such as those identified above, have heretofore been typically packaged in disposable trays, and were further frequently coated with powders to inhibit their propensity to creep or cold flow at elevated temperatures. Those skilled in the art will recognize that the powders employed for coating these pressure sensitive, adhesive compositions, as described above, are often absorbed into the adhesives prior to use, or further, if the adhesive cold flows, the powder particles will usually separate thereby exposing the pressure sensitive, hot melt adhesive composition. Additionally, and as discussed earlier, the commercially available packaging film product combination marketed under the trade designation "Zeropack" by the H. B. Fuller Company, has a different chemistry, and a high molecular weight (resulting in a low melt index), and therefore is very difficult to blend with the hot melt, pressure sensitive adhesive compositions enclosed therein. This characteristic results in the melted packaging film not mixing into the hot melt adhesive composition in the environment of a stagnet melt tank. Still further, and as discussed earlier, the composition of the aforementioned packaging film has a propensity, under certain manufacturing conditions, to clog filters and nozzles on commercially available adhesive application machinery thereby substantially diminishing its usefulness under some commercial conditions, notwithstanding that additional measures, such as the addition of mechanical mixers have been added to melt tanks and extrusion lines to assist in the blending process. Finally, it appears that this same packaging film composition may perhaps be responsible for adversely affecting the physical characteristics of the pressure sensitive, hot melt adhesive compositions inasmuch as the bond strength of the resulting adhesive compositions are reported by users to be somewhat degraded.

The styrene-isoprene-styrene block copolymer component of the present invent ion is a styrenic A-B-A block copolymer which is available from a number of commercial sources, and which is marketed under assorted trademarks or trade designations. These include, for example, "Vector 4411D, and 4211D;" and "SOLT 193B" to name but a few. The polymers "Vector 4411D and 4211D" are manufactured by the Dexco Chemical Company: and "SOLT 193B" is manufactured by the Enichem Americas Company. It has been discovered that suitable styrene-isoprene-styrene block copolymers (SIS) for use with the present formulation must include a high styrene content, that is, the percentage of styrene, by weight, of the entire block copolymer of SIS must exceed at least 20% to be useful in the present formulation. In this regard, it is believed that the elevated styrene content, noted above, contributes in some fashion to the present formulation having a commercially acceptable range of viscosity and further contributes to the present formulation having a nonblocking nature. This characteristic will be discussed in further detail hereinafter. Moreover, it should be understood that small amounts of anti-blocking or slip agents may be added to the formulation to further enhance the non-blocking nature of same. In this regard, these materials include relatively incompatible compounds that "bloom" to the surface of the packaging film thereby preventing blocking. Additionally, the viscosity of the present composition, based upon its preferred formulation, lies in a range of about 40,000 to about 500,000 cP at temperatures of 325°F. This is in contrast to the earlier described product "Zeropack," which has a viscosity greater than the highest viscosity value for the present formulation.

In addition to the foregoing, it should be understood that other A-B-A block copolymers may find usefulness in the present invention. For example, a styrene-butadiene-styrene (SBS) block copolymer or a styrene-butadiene multiblock (tapered) block copolymer may be substituted for the SIS block copolymer, as discussed above, with equal success. In this regard, a suitable SBS copolymer may be purchased from the Firestone Chemical Company under the trade designation "Stereon 840A." Similarly, and when employing an SBS block copolymer such as "Stereon 840A", a high styrene content is preferred. In the present instance, the percentage styrene, by weight, of the entire block copolymer for each of the block copolymers discussed above is: "Stereon 840A," approximately 43%; "Vector 4411D," approximately 42%; "Vector 4211D," approximately 28%; and "SOLT 193B," approximately 25%. In contrast, the test results, noted below, illustrates that the use of a low styrene content block copolymer is not suitable for the present invention. In this regard, Kraton 1107 is utilized and compared with the copolymers noted above. "Kraton 1107" is a trademark of the Shell Chemical Company. Kraton 1107 has a styrene content of approximately 14%.

The aromatic hydrocarbon resin component of the improved packaging film composition of the present invention is believed to contribute, in some measure, to the nonblocking characteristics of same. In this regard, it has been discovered by the inventors that high aromatic content resins are preferred. In the present instance, Commercially, available aromatic resins which find usefulness in the invention include a copolymerized vinyl toluene/alpha methyl styrene which is manufactured by The Hercules Chemical Company, and sold under the trade designation "Piccotex 120". In the preferred formulation, the aromatic hydrocarbon resin component includes about 50%, by weight, of vinyl toluene and about 50%, by weight, of alpha methyl styrene. As discussed earlier, the aromatic hydrocarbon resin component represents about 30%, by weight, of the entire packaging film composition in the preferred formulation. Other suitable aromatic resins and polymers include a copolymerized Alpha Methylstyrene/Styrene and which is marketed under the trade designation "Kristalex 3100," and which is sold by The Hercules Chemical Company.

Additionally, it has been discovered that an aliphatic modified aromatic hydrocarbon such as that sold under the trade designation of "Norsolene A110" by The Sartomer Company, and pure monomer aromatic hydrocarbons, such as those which are commercialized under the trade designations "Endex 120, and 155," respectively, are useful in the practice of the present invention. Comparative testing data illustrating the non-blocking nature of the present improved packaging film will be discussed hereinafter. "Endex 120, and 155" are both manufactured by The Hercules Chemical Company.

The suitable mineral oil component of the compositions of the present invention may include assorted plasticizers and oils which are well understood by those skilled in the art. In this regard, a suitable mineral oil for use in the present formulation may be purchased commercially from the Witco Company under the trade designation "Kaydol". Other compatible oils may be substituted therefor and one skilled in the art will be capable of easily selecting a replacement oil, if necessary, to achieve the desired level of compatibility.

The wax component of the compositions of the present invention nay be selected from a number of commercial sources. In the practice of the invention, a suitable paraffin wax may be purchased under the trade designation "Mobilwax 150" from the Mobil Chemical Company. The above-identified paraffin wax has a melting point of approximately 185°F.

The wax or oil components which are used in the present invention reduce the melt viscosity of the packaging film composition without appreciably decreasing its physical characteristics. Among the applicable wax diluents are included: (1) low molecular weight, that is, 1,000 through 6,000, polyethylene having a hardness value, as determined by ASTM Method D-1321, of about 0.1 to 120 and an ASTM softening point of about 150° through 250°F.; (2) petroleum waxes such as the paraffin wax noted above, and having a melting point of from about 130° to about 180°F., and microcrystalline wax having a melting point of from about 135° to 200°F., the latter melting points being determined by ASTM Method D 127-60; (3) atactic polypropylene having a ball and ring softening point of about 120° to 160°C; and (4) synthetic waxes made by polymerizing carbon monoxide and hydrogen such as Fischer-Tropsch wax. Each of these wax diluents is solid at room temperature. Further, hydrogenated animal, fish, and vegetable fats and oils such as hydrogenated tallow, lard, soya oil, cottonseed oil, castor oil, menhadin oil, cod liver oil, etc. are also solid materials that ambient temperature by virtue of their being hydrogenated and are also found to be useful, and function as wax diluent equivalents. These hydrogenated materials are often referred to in the adhesive industry as "animal or vegetable waxes." Moreover, hydrocarbon oils, especially naphthenic or paraffinic process oils, may also be employed herein as a diluent.

The preferred antioxidant/stabilizer component of the compositions of the present invention is tetrakis (methylene (3,5-di-tert-butyl-4-hydroxyhydrocinnamate)) methane. This antioxidant/stabilizer composition is available from the Ciba-Geigy Company under the trade designation "Irganox 1010".

"Irganox 1010" and similar stabilizers-antioxidants are also known as hindered phenols. Representative hindered phenols include: 1,3,5-tri-methyl-2,4,6,-tris (3,5-ditert-butyl-4-hydroxy benzyl) benzene; pentaerythritol tetrakis-3 (3,5-di-tert-butyl-4-hydroxyphenyl) propionate; m-octadecyl-3(3,5-di-tert-butyl-4-hydroxyphenyl) propionate; 4,4'-methylenebis (4-methyl-6-tert-butylphenol); 6-(4-hydroxyphenoxy)-2,4-bis (n-octyl-

5

thio)-1,3,5-triazine; di-n-octadecyl-3,5-di-tert-butyl-4-hydroxybenzyl-phosphonate; 2-(n-octylthio) ethyl-3,5-di-tert-butyl-4-hydroxy-benzoate; and sorbitol hexa-(3,3,5-di-tert-butyl-4-hydroxy-phenyl propionate and pentaerythritol tetrakis-3 (3,5-dit-tert-butyl-4 hydroxyphenyl) propionate.

The improved packaging film of the present invention may be formulated using any of the techniques well-known to those skilled in the art.

The packaging film compositions of the present invention may be formulated using any of the techniques known in the art. An exemplary procedure involves placing the total tackifying resin, all the wax, and oil, and the stabilizer in a jacketed mixing kettle, preferably in a jacketed heavy duty mixer of The Baker-Perkins or Day type, which is equipped with rotors and thereafter raising the temperature to a range of from about 250° to 350°F., and more preferably about 300°F. The precise temperature to be used will depend on the melting point of the particular ingredients. When the initial mixture has been melted and blended, the mixture is blanketed in $CO_2$ at a slow flow rate and the block copolymer is added.

As discussed earlier, the viscosity of the improved packaging film of the present invention is about 40,000 to about 500,000 cP at 325°F, as determined by employing a Brookfield Thermocel and utilizing the testing techniques which are set forth in ASTM Method D3236-73, which is incorporated by reference herein. Once mixed and equilibrated, the molten packaging film of the present invention can be formed by casting or extruding the molten composition onto a release coated surface. Commercially available machinery for performing these manufacturing techniques may be purchased from The Nordson Company. It should be understood that due to the propensity for the present compositions to have a relatively short open time, that is, the time period wherein it may block, or adhere to an adjoining surface, the new packaging film composition may be quickly rewound upon itself for storage and subsequent use in commercially available filling and wrapping machinery. In this regard, the improved packaging film of the present invention can be utilized on semi-automatic multi-size filling and wrapping machines such as those manufactured under the trade designation "Mark 10I-12-A system; Inverted Horizontal Form, Fill and Seal Machine," and which is manufactured by Premier Packaging Systems, Inc. of Waukesha, Wisconsin. Other compatible machinery may be easily selected by those skilled in the art. As earlier discussed, the packaging film enclosing the hot melt adhesive ccmposition is charged directly to the melt tank of a commercial not melt application machine thereby eliminating any waste and avoiding may of the shortcomings attendant to the use of the conventional packaging techniques discussed earlier.

Examples 1-13

The practice of the invention is further illustrated in the examples which are set forth in the graph below. All materials are expressed as a percentage by weight of the entire composition. Further, each of the packaging film compositions were prepared by employing the techniques described earlier.

| Examples | 1 | 2 | 3 | 4 | 5 | 6 | 7 | 8 | 9 | 10 | 11 | 12 | 13 |
|---|---|---|---|---|---|---|---|---|---|---|---|---|---|
| Piccotex 120 | 30 | | | | | | | | | | | | |
| Kristalex 3100 | | 30 | | | | | | | | | | | |
| Petcoal 120 (1) | | | 30 | | | | | | | | | | |
| Norsolene A110 (2) | | | | 30 | | | | | | | | | |
| Endex 155 (3) | | | | | 30 | | | | | | | | |
| Endex 120 (4) | | | | | | 30 | | | | | | | |
| Westrez 2110 (5) | | | | | | | 30 | | | | | | |
| Escorez 5320 (6) | | | | | | | | 30 | | | | | |
| Vector 4411D (42%) | 50 | 50 | 50 | 50 | 50 | 50 | 50 | 50 | 50 | | | | |
| Kraton 1107 (14%) (7) | | | | | | | | | | 50 | | | |
| Solt 193 (25%) | | | | | | | | | | | 50 | | |
| Vector 4211D (28%) | | | | | | | | | | | | 50 | |
| Stereon 840A (SBS) (43%) | | | | | | | | | | | | | 50 |
| Kaydol | 10 | 10 | 10 | 10 | 10 | 10 | 10 | 10 | 10 | 10 | 10 | 10 | 10 |
| Paraffin Wax (150°F mp) | 10 | 10 | 10 | 10 | 10 | 10 | 10 | 10 | 10 | 10 | 10 | 10 | 10 |
| Irganox 1010 | 3 | 3 | 3 | 3 | 3 | 3 | 3 | 3 | 3 | 3 | 3 | 3 | 3 |
| Viscosity at 325F (cP) | 82,900 | 48,900 | 69,800 | 44,280 | 281,000 | 60,200 | 41,400 | 30,400 | 216,500 | 62,300 | 84,900 | 50,900 | 160,750 |
| Blocks (500 gm/in, 120 F, 24 hours) | NO | NO | NO | NO | NO | NO | YES | YES | YES | NO | NO | NO | NO |

(1) Manufactured by Grenhall Chemicals Ltd.
(2) Manufactured by The Sartomer Company
(3) Manufactured by The Hercules Company
(4) Manufactured by The Hercules Company
(5) Manufactured by The Arizona Chemical Company
(6) Manufactured by The Exxon Chemical Company
(7) Manufactured by The Shell Chemical Company

To evaluate the properties of the packaging film compositions of the present invention, the inventors conducted assorted tests, which are discussed below, to evaluate any bond strength variations which could be ascertained and quantified when the present packaging film compositions were melted and combined with the pressure sensitive, hot melt adhesive compositions identified earlier under various conditions and concentrations. Further, the tests conducted, below, were employed to determine the propensity of the present packaging film composition to block, that is, adhere to a similar surface under typical storage conditions and at elevated temperatures.

TESTING AND COATING PROCEDURES

VISCOSITY - Brookfield thermocel viscosities were conducted in accordance with ASTM Method D3236-73

MULTIBEAD LAMINATIONS - Constructions were prepared using an Acumeter LH-1 coater using a multibead (3-bead) head. The hot melt adhesive was applied directly onto a polyethylene substrate by utilizing three (3) 0.015 inch (.38mm) nozzles. After allowing an open time of approximately 0.5 seconds, the polyethylene substance was combined with a polypropylene substrate and simultaneously compressed between two rollers. The lower compression roller was steel and the upper roller was 40 durometer rubber. The compression was 1 bar. The application temperature for the hot melt adhesive was 275°F and the add-on was 1.5 mg/inch.

SPIRAL SPRAY LAMINATIONS - One spiral spray head was mounted on an Acumeter LH-1 coater. The hot melt adhesive was applied through a 0.018 inch (.45mm) nozzle at an application temperature of 300°F. The air flow was heated to 400°F. The adhesive was sprayed onto a polyethylene substrate and combined with a polypropylene substrate after an open time of approximately 0.5 seconds. The laminate was then compressed between steel and rubber rollers with an application pressure of approximately 2 bar. The add-on level was approximately 3.0 mg/inch.

ELASTIC ATTACHMENT (SPRAY) - One spiral spray head was mounted on an Acumeter LH-1 coater. The hot melt adhesive was extruded at an application temperature of 300°F through a 0.030 inch (.76 mm) nozzle. The hot melt adhesive was sprayed onto 3 strand elastic which is backed up with a polyethylene substrate. Further, an air temperature of 400°F was employed during the application process. Following an open time of approximately 0.25 seconds, the elastic was compressed between the polyethylene substrate and a nonwoven substrate. Compression rollers of steel and rubber were employed. The compression employed was approximately 2 bar. The add-on level was approximately 12.0 mg/inch. The elastic was stretched to approximately 250 percent.

INSTRON PEEL STRENGTH TEST PROCEDURE - The construction laminations produced with the materials and under the conditions discussed above, were suspended by one of the substrates from the upper jaw of an Instron tensile tester. The second substrate of each of the laminates was then clamped in the lower jaw of the same device so that the jaw's downward motion produced a 180° peel force. The adhesive bonds were substantially vertically oriented. The crosshead speed of the Instron tensile tester was approximately 12 inches per minute. An average bond strength of six replicate samples were recorded.

ELASTIC ATTACHMENT CREEP RESISTANCE PROCEDURE - The constructions noted above, are stretched to the original length of the polyethylene substrate. While stretched, the laminate is attached to a sheet of corrugated material, and the length of the original bond is measured. This assembly is then placed in a mechanical convection incubator at a temperature of 120°F. At time intervals of 30, 60, 90, 120, 180, and 240 minutes, the bond length is measured, and the amount of delamination recorded.

BLOCKING TEST PROCEDURE - A piece of the present packaging film is formulated and cut into five 2" by 1" (50.8mm by 25.4mm) sections. These rectangles are each folded in half to make five 1" x 1" (25.4mm by 25.4mm) square. These five squares are placed on top of each other with release paper disposed between them. A 500 gram weight is then placed on top of the pile. The piled sample is them exposed to environmental conditions which include temperatures of 120°F for a period of 24 hours, and then checked for any detectable blocking.

COMPATIBILITY TEST PROCEDURE - 100 grams of pressure sensitive, hot melt adhesive compositions manufactured by Findley Adhesives, Inc. of Wauwatosa, Wisconsin under the trade designations H2052; H2123; 582-371A; and 990-374B, respectively, are each placed in individual glass jars. The present packaging film, in amount: which would substantially equal 1%, 2%, and 5% of the total formulation, are placed on top of each of the adhesives. Each jar is then placed in a 300°F oven for two hours. Each simple is thereafter subsequently stirred (8 times) and checked for undissolved film.

WRAPPED BLACK AGING - Two blocks of pressure sensitive, hot melt adhesive having sizes of approximately 3 inches by 4 inches (76.2 mm by 101.6 mm) are individually wrapped with the packaging film of the present invention and then placed, one, on top of the other, in two separate ovens at temperatures of 100°F and 110°F, respectively, and then, subsequently checked following periods of 24 and 96 hours for tackiness of the packaging film or blocking which manifests itself between the respective adhesive blocks.

ADHESIVE HEAT AGING - 300 grams of pressure sensitive, hot melt adhesive is placed in three (3) individual glass beakers. Additionally, packaging film in amounts which would equal 1% and 5% of the total formulation are placed in the individual beakers. The individual beakers are each placed in a forced draft oven at 350°F for 96 hours. The viscosity of the formulations are determined both prior to, and post heat aging.

In the graphs which follow, the results of the tests discussed above, with various concentrations of 0, 1% and 5%, by weight of the packaging film, in blended combination with hot melt adhesive compositions which are commercially available under the trade designations 580-336, H2239, and H4003 of Findley Adhesives, Inc. are disclosed.

| MULTIBEAD CONSTRUCTION LAMINATIONS AVERAGE INSTRON PEELS AT 12 IN/MIN | |
| --- | --- |
| HOT MELT ADHESIVE COMPOSITIONS WITH VARIOUS CONCENTRATIONS OF DISSOLVED PACKAGING FILM | INSTRON PEELS (GRAMS) |
| 580-336 WITH 0% | 782 |
| 580-336 WITH 1% | 718 |
| 580-336 WITH 5% | 735 |
| H2239 WITH 0% | 1034 |
| H2239 WITH 1% | 1237 |
| H2239 WITH 5% | 1149 |
| H4003 WITH 0% | 825 |
| H4003 WITH 1% | 818 |
| H4003 WITH 5% | 822 |

In the graph which follows, the heat seal bond strength under assorted heat sealing conditions are set forth. In this regard, it should be understood that an average instron peel of about 1350 grams or greater achieves packaging film tearing or destruction.

| Average Istron Peel (gm) | | | | | | | |
| --- | --- | --- | --- | --- | --- | --- | --- |
| Heat Seal Temperature | 1.0 Second | 1.5 Seconds | 2.0 Seconds | 2.5 Seconds | 3.0 Seconds | 3.5 Seconds | 4.0 Seconds |
| 175F | - | - | - | - | - | 8 gm | 13 gm |
| 200F | - | - | - | - | - | 75 gm | 821 gm |
| 225F | - | - | 34 gm | 221 gm | 660 gm | 1000 gm | 1481 gm |
| 250F | 104 gm | 116 gm | 1101 gm | 1196 gm | 1405 gm | 1600 gm | 1608 gm |
| 275F | 84 gm | 289 gm | 1171 gm | 1580 gm | 1613 gm | 1615 gm | 1615 gm |
| 300F | 1315 gm | 1402 gm | 1641 gm | 1485 gm | 1520 gm | 1650 gm | 1650 gm |
| 325F | 1363 gm | 1650 gm | 1650 gm | 1650 gm | 1650 gm | 1650 gm | 1650 gm |

| SPIRAL SPRAY CONSTRUCTION LAMINATIONS AVERAGE INSTRON PEELS AT 12 IN/MIN | |
| --- | --- |
| HOT MELT ADHESIVE COMPOSITIONS WITH VARIOUS CONCENTRATIONS OF DISSOLVED PACKAGING FILM | INSTRON PEELS (GRAMS) |
| H2239 WITH 0% | 786 |
| H2239 WITH 1% | 926 |
| H2239 WITH 5% | 862 |

| ADHESIVE HEAT AGING 96 HOURS AT 350°F | | |
|---|---|---|
| HOT MELT ADHESIVE COMPOSITIONS WITH VARIOUS CONCENTRATIONS OF DISSOLVED PACKAGING FILM | VISCOSITY | |
| | INITIAL | AGED |
| H2239 WITH 0% | 3225 | 1185 |
| H2239 WITH 1% | 3280 | 1193 |
| H2239 WITH 5% | 3330 | 1190 |

| SPIRAL SPRAY, THREE-STRAND ELASTIC AVERAGE CREEP RESISTANCE AT 120°F | |
|---|---|
| HOT MELT ADHESIVE COMPOSITIONS WITH VARIOUS CONCENTRATIONS OF DISSOLVED PACKAGING FILM | RETENTION PERCENT 4 HOURS |
| H2239 WITH 0% | 91 |
| H2239 WITH 1% | 92 |
| H2239 WITH 5% | 93 |
| H2085 WITH 0% (2) | 86 |
| H2085 WITH 1% | 87 |
| H2085 WITH 5% | 87 |

(2) H2085 is a hot melt adhesive composition available from Findley Adhesives, Inc. of Wauwatosa, Wisconsin

An analysis of test results, noted above, will reveal no substantial or noteworthy adverse effects when concentrations of 1% or 5%, by weight, of the packaging film is mixed in combination with the hot melt, pressure sensitive adhesives employed for these same tests.

Further, it should be understood that with respect to the blocking test, the results revealed no blocking between the adjacent surfaces of the packaging film following a period of 24 hours, at 120°F. In addition, the same text was conducted at a temperature of 140°F for 24 hours. The same results were achieved. The laboratory results of the compatibility test procedure also indicated no detectable compatibility problems. Finally, the results of the wrapped block aging test revealed no detectable blocking problems when the specimens were examined following exposure of the specimen to temperatures of 100°F, and 110°F, respectively. Additional tests using the same procedure under more severe conditions of 120°F, and 140°F revealed that blocking begins to occur after 96 hours at a temperature of 120°F and begins at about 24 hours at 140°F.

It will be apparent to those skilled in the art that the foregoing examples have been made for the purpose of illustration and that variations may be made in proportions, procedures, and materials without departing from the scope of the invention which is set forth in the claims which follow.

**Claims**

1. A packaging film for enclosing cold-flowing adhesive compositions, the packaging film comprising:
   about 20% to about 80%, by weight, of a styrenic A-B-A block copolymer;
   0 to about 50%, by weight, of an aromatic hydrocarbon resin;
   0 to about 30%, by weight, of a suitable mineral oil;
   0 to about 40%, by weight, of a wax; and
   0 to about 5%, by weight, of an antioxidant/stabilizer.

2. A packaging film, as claimed in claim 1, and wherein the styrenic A-B-A block copolymer is styrene-isoprene-styrene block copolymer, and wherein styrene-isoprene-styrene block copolymer has at least 20% styrene by weight, of the entire block copolymer.

3. A packaging film, as claimed in claim 1, and wherein the styrenic A-B-A copolymer is styrene-butadiene-styrene block copolymer, and wherein the styrene-butadiene-styrene block copolymer has at least 20% styrene, by weight, of the entire block copolymer.

4.  A packaging film, as claimed in claim 2, and wherein the aromatic hydrocarbon resin is a mixture of copolymers which include about 50%, by weight, of vinyl toluene, and about 50%, by weight, of alpha methyl styrene.

5.  A packaging film, as claimed in claim 4, and wherein the wax includes a fully refined paraffin wax which has a melting point above 150°F.

6.  A packaging film, as claimed in claim 5, and wherein the antioxidant/stabilizer includes a hindered phenolic antioxidant.

7.  A packaging film, as claimed in claim 6, and which, when melted and combined with the cold-flowing adhesive composition, has no deleterious effect on the performance characteristics of the adhesive; and wherein the packaging film has a viscosity of about 40,000 to about 200,000 cP and 325°F.

8.  A packaging film, as claimed in claim 5, and wherein the packaging film is nonblocking when exposed to environmental conditions which include temperatures of 120°F for time periods of 24 hours.

9.  A packaging film, as claimed in claim 2, and wherein the aromatic hydrocarbon resin is a mixture of copolymers which include alpha methyl styrene and styrene.

10. A packaging film, as claimed in claim 2, and wherein the aromatic hydrocarbon resin includes a pure monomer aromatic hydrocarbon.

11. A packaging film, as claimed in claim 2, and wherein the aromatic hydrocarbon resin includes an aliphatic modified aromatic hydrocarbon.

12. A packaging film for enclosing cold-flowing, pressure sensitive, hot melt adhesive compositions, and wherein the packaging film, when melted, is combined with the pressure sensitive, hot melt adhesive compositions, the packaging film comprising:
    about 30% by weight of a mixture of copolymers which include vinyl toluene, and alpha methyl styrene;
    about 50%, by weight, of a styrene-isoprene-styrene block copolymer and wherein the percentage weight of styrene is greater than 20% of the weight of the copolymer;
    about 10%, by weight, of a compatible mineral oil;
    about 10%, by weight, of a compatible hydrocarbon wax; and
    about 3%, by weight, of a compatible antioxidant/stabilizer.

13. A packaging film as claimed in claim 1 and wherein the mixture of copolymers includes 50%, by weight, of vinyl toluene and 50%, by weight, of alpha methyl styrene.

14. A packaging film for enclosing cold-flowing, pressure sensitive, hot melt adhesive compositions, and wherein the packaging film, when melted, is combined with the pressure sensitive, hot melt adhesive compositions, the packaging film comprising:
    about 30%, by weight, of a mixture of copolymers which include vinyl toluene, and alpha methyl styrene;
    about 50%, by weight, of a styrene-butadiene-styrene block copolymer, and wherein the percentage, by weight, of styrene is greater than 20% of the weight of the copolymer;
    about 10%, by weight, of a compatible mineral oil;
    about 10%, by weight, of a compatible hydrocarbon wax; and
    about 3%, by weight, of a compatible antioxidant/stabilizer.

15. A packaging film as claimed in claim 14 and wherein the styrene-butadiene-styrene block copolymer may include a styrene-butadiene multiblock (tapered) block copolymer; and wherein the mixture of copolymers includes 50%, by weight, of vinyl toluene, and 50%, by weight, of alpha methyl styrene.